# EUROPEAN PATENT APPLICATION

(11) **EP 4 803 855 A1**
(43) Date of publication of application: **09.09.2026**
(21) Application number: 25161236.2
(22) Date of filing: 03.03.2025
(51) Int. Cl.: G01B 15/00, B60C 23/06

(54) **RADAR-BASED DETERMINATION OF TYRE PARAMETERS**

(71) Applicant: Volvo Truck Corporation, 405 08 Göteborg (SE)
(72) Inventor: LAINE, Leo, GÖTEBORG (SE); RYDSTRÖM, Mats, BILLDAL (SE); KUMRU, Murat, GÖTEBORG (SE); JONASSON, Mats, PARTILLE (SE); MARZBANRAD, Alireza, GÖTEBORG (SE)
(74) Representative: Ström & Gulliksson AB

(57) **Abstract**

A system and method are disclosed for determining the shape of at least part of a tyre. The system comprises: a plurality of radio-reflective objects associated with the tyre; one or more wheel-mounted radar sensors configured to receive radio waves reflected from each of the plurality of radio-reflective objects; and processing circuitry configured to: determine a position of each of the plurality of radio-reflective objects based on a corresponding radar measurement made by the one or more wheel-mounted radar sensors; and determine the shape of at least part of the tyre based on the determined positions. A corresponding tyre, vehicle, computer system, and computer-implemented method are also disclosed.

## Description

### TECHNICAL FIELD

The disclosure relates generally to vehicle control. In particular aspects, the disclosure relates to radar-based determination of tyre parameters. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The interaction between the wheel of a vehicle and a ground surface on which the vehicle is travelling are an important factor in the generation of tyre forces of the vehicle, which provide traction for the vehicle when it is in motion. This interaction depends, among other factors, on parameters of the tyres of the vehicle. For example, the shape of the tyre during vehicle motion will affect the contact patch area between the tyre and the ground surface, which will in turn affect the tyre force acting between the tyre and the ground surface. The shape of the tyre may be dependent on parameters such as tyre stiffness and tyre pressure.

Knowledge of these various parameters is important for vehicle motion management, in particular to control tyre forces and achieve various objectives relating to, for example, tyre wear, energy efficiency, traction, stability, and comfort. Accurate and reliable estimation of these parameters therefore enables reliable implementation of a large number of vehicle control functions.

It is therefore desired to provide systems, methods and other approaches for tyre parameter estimation that attempt to resolve or at least mitigate one or more of these issues.

### SUMMARY

This disclosure provides systems, methods and other approaches for determining the shape of at least part of a tyre. One or more wheel-mounted radar sensors are used to determine the positions of a plurality of radio-reflective objects associated with the tyre. For example, the radio-reflective objects may be embedded in the tread of the tyre. Based on the determined positions of the radio-reflective objects, the shape of the part of the tyre comprising the objects can be determined. Further parameters of the tyre, such as a contact patch area between the tyre and a ground surface supporting the tyre, a stiffness of the tyre, a pressure of the tyre, and a tyre force acting between the tyre and a ground surface, can be determined based on the determined shape.

According to a first aspect of the disclosure, there is provided a system for determining the shape of at least part of a tyre, the system comprising: a plurality of radio-reflective objects associated with the tyre; one or more wheel-mounted radar sensors configured to receive radio waves reflected from each of the plurality of radio-reflective objects; and processing circuitry configured to: determine a position of each of the plurality of radio-reflective objects based on a corresponding radar measurement made by the one or more wheel-mounted radar sensors; and determine the shape of at least part of the tyre based on the determined positions.

The first aspect of the disclosure may seek to provide a system capable of reliably and accurately determining the shape of at least part of a tyre. A technical benefit may include that further parameters relevant to tyre and vehicle behaviour, such as contact patch area, tyre stiffness, tyre pressure, and tyre force, can be determined based on proper estimation of tyre shape, thereby improving vehicle safety and control.

Optionally in some examples, including in at least one preferred example, at least some of the plurality of radio-reflective objects are disposed in the body of the tyre, wherein the body of the tyre comprises a radio-permeable material. A technical benefit may include that the system is self-contained in the wheel and capable of acquiring reliable and accurate radar measurements.

Optionally in some examples, including in at least one preferred example, at least some of the plurality of radio-reflective objects are disposed in a radially outermost layer of the body of the tyre. A technical benefit may include that the shape of the tyre at or near a contact point with the ground can be accurately determined, enabling improved determination of parameters such as contact patch area and tyre force.

Optionally in some examples, including in at least one preferred example, at least some of the plurality of radio-reflective objects are disposed on an inner liner of the tyre. A technical benefit may include that that the shape of the tyre at or near an interior space of the tyre can be accurately determined, enabling improved determination of parameters such as tyre pressure.

Optionally in some examples, including in at least one preferred example, at least some of the plurality of radio-reflective objects are arranged in a predetermined pattern from the perspective of the one or more wheel-mounted radar sensors. A technical benefit may include that a known configuration of radio-reflective objects can be used to determine any change in position of the radio-reflective objects over time.

Optionally in some examples, including in at least one preferred example, at least some of the plurality of radio-reflective objects are arranged in one or more radially distributed layers. A technical benefit may include that the shape of the tyre can be determined in a radial direction, enabling improved determination of parameters such as tyre stiffness.

Optionally in some examples, including in at least one preferred example, the processing circuitry is configured to: determine a respective distance between the one or more radar sensors and each of the plurality of radio-reflective objects based on the corresponding radar measurement: and determine the position of each of the plurality of radio-reflective objects based on the respective determined distances. A technical benefit may include that the positions of the radio-reflective objects can be determined in a reliable and accurate manner, and any changes in relative or absolute positions can be determined accordingly.

Optionally in some examples, including in at least one preferred example, the processing circuitry is configured to determine the position of each of the plurality of radio-reflective objects further based on angle data comprised in the corresponding radar measurement. A technical benefit may include that a three-dimensional position of the radio-reflective objects can be determined in a reliable and accurate manner.

Optionally in some examples, including in at least one preferred example, the processing circuitry is further configured to determine one or more of a contact patch area between the tyre and a ground surface supporting the tyre, a stiffness of the tyre, a pressure of the tyre, and a tyre force acting between the tyre and a ground surface based on the determined shape. A technical benefit may include that parameters relevant to tyre and vehicle behaviour can be determined in a reliable and accurate manner, thereby improving vehicle safety and control.

Optionally in some examples, including in at least one preferred example, the processing circuitry is further configured to: determine a first position of each of the plurality of radio-reflective objects based on a first corresponding radar measurement made at a first time by the one or more wheel-mounted radar sensors; determine a second position of each of the plurality of radio-reflective objects based on a second corresponding radar measurement made at a second time by the one or more wheel-mounted radar sensors, wherein the second time is later than the first time; and determine deformation of the tyre between the first time and the second time based on a difference between the first positions and the second positions. A technical benefit may include that tyre shape and deformation over time can be determined and analysed in an accurate manner, thereby improving assessment of tyre behaviour.

Optionally in some examples, including in at least one preferred example, the processing circuitry is configured to determine deformation of the tyre based on one or more of a difference between the absolute first position and the absolute second position of one or more of the plurality of radio-reflective objects and a difference between relative positions of two or more of the plurality of radio-reflective objects. A technical benefit may include that a number of different approaches to assessing tyre deformation are provided. Relative positioning may be more robust as relative positions are almost independent of the position of the the radar sensor.

According to a second aspect of the disclosure, there is provided a tyre comprising the system of the first aspect. The second aspect of the disclosure may seek to provide a tyre capable of reliably and accurately determining at least part of its shape. A technical benefit may include that further parameters relevant to tyre and vehicle behaviour, such as contact patch area, tyre stiffness, tyre pressure, and tyre force, can be determined based on proper estimation of tyre shape, thereby improving vehicle safety and control.

According to a third aspect of the disclosure, there is provided a vehicle comprising the system of the first aspect. The second aspect of the disclosure may seek to provide a vehicle capable of reliably and accurately determining the shape of at least part of a tyre. A technical benefit may include that further parameters relevant to tyre and vehicle behaviour, such as contact patch area, tyre stiffness, tyre pressure, and tyre force, can be determined based on proper estimation of tyre shape, thereby improving vehicle safety and control.

According to a fourth aspect of the disclosure, there is provided a method for determining the shape of at least part of a tyre, the method comprising: receiving, by one or more wheel-mounted radar sensors, radio waves reflected from each of a plurality of radio-reflective objects associated with the tyre; determining, by processing circuitry of a computer system, a position of each of the plurality of radio-reflective objects based on a corresponding radar measurement by the one or more wheel-mounted radar sensors; and determining, by the processing circuitry, the shape of at least part of the tyre based on the determined positions.

The fourth aspect of the disclosure may seek to provide a method capable of reliably and accurately determining the shape of at least part of a tyre. A technical benefit may include that further parameters relevant to tyre and vehicle behaviour, such as contact patch area, tyre stiffness, tyre pressure, and tyre force, can be determined based on proper estimation of tyre shape, thereby improving vehicle safety and control.

According to a fifth aspect of the disclosure, there is provided a computer system for determining the shape of at least part of a tyre, the computer system comprising processing circuitry configured to: receive a radar measurement corresponding to each of a plurality of radio-reflective objects associated with the tyre from one or more wheel-mounted radar sensors; determine a position of each of the plurality of radio-reflective objects based on a corresponding radar measurement by the one or more wheel-mounted radar sensors; and determine the shape of at least part of the tyre based on the determined position.

The fifth aspect of the disclosure may seek to provide a computer system capable of reliably and accurately determining the shape of at least part of a tyre. A technical benefit may include that further parameters relevant to tyre and vehicle behaviour, such as contact patch area, tyre stiffness, tyre pressure, and tyre force, can be determined based on proper estimation of tyre shape, thereby improving vehicle safety and control.

According to a sixth aspect of the disclosure, there is provided a computer-implemented method for determining the shape of at least part of a tyre, the computer-implemented method comprising: receiving, by processing circuitry of a computer system a radar measurement corresponding to each of a plurality of radio-reflective objects associated with the tyre from one or more wheel-mounted radar sensors; determining, by the processing circuitry, a position of each of the plurality of radio-reflective objects based on a corresponding radar measurement by the one or more wheel-mounted radar sensors; and determining, by the processing circuitry, the shape of at least part of the tyre based on the determined position.

The sixth aspect of the disclosure may seek to provide a computer-implemented method capable of reliably and accurately determining the shape of at least part of a tyre. A technical benefit may include that further parameters relevant to tyre and vehicle behaviour, such as contact patch area, tyre stiffness, tyre pressure, and tyre force, can be determined based on proper estimation of tyre shape, thereby improving vehicle safety and control.

According to a seventh aspect of the disclosure, there is provided a computer program product comprising program code for performing, when executed by processing circuitry, the computer-implemented method of the sixth aspect. The seventh aspect of the disclosure may seek to enable new vehicles and/or legacy vehicles to be conveniently configured, by software installation/update, to reliably and accurately determine the shape of at least part of a tyre. A technical benefit may include that further parameters relevant to tyre and vehicle behaviour, such as contact patch area, tyre stiffness, tyre pressure, and tyre force, can be determined based on proper estimation of tyre shape, thereby improving vehicle safety and control.

According to an eighth aspect of the disclosure, there is provided a non-transitory computer-readable storage medium comprising instructions, which when executed by processing circuitry, cause the processing circuitry to perform the computer-implemented method of the sixth aspect. The eighth aspect of the disclosure may seek to enable new vehicles and/or legacy vehicles to be conveniently configured, by software installation/update, to reliably and accurately determine the shape of at least part of a tyre. A technical benefit may include that further parameters relevant to tyre and vehicle behaviour, such as contact patch area, tyre stiffness, tyre pressure, and tyre force, can be determined based on proper estimation of tyre shape, thereby improving vehicle safety and control.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically shows a side view of a vehicle according to an example of the disclosure.
**FIG. 2** schematically shows a cross-section of a tyre according to an example of the disclosure.
**FIG. 3** schematically shows a system for determining the shape of at least part of a tyre according to an example of the disclosure.
**FIG. 4** is a flow chart of a computer-implemented method according to an example of the disclosure.
**FIG. 5** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

The interaction between the wheel of a vehicle and a ground surface on which the vehicle is travelling are an important factor in the generation of tyre forces of the vehicle, which provide traction for the vehicle when it is in motion. This interaction depends on parameters of the tyres of the vehicle. For example, the shape of the tyre during vehicle motion will affect the contact patch area between the tyre and the ground surface, which will in turn affect the tyre force acting between the tyre and the ground surface. The shape of the tyre may be dependent on parameters such as tyre stiffness and tyre pressure. Knowledge of these various parameters is important for vehicle motion management, in particular to control tyre forces and achieve various objectives relating to, for example, tyre wear, energy efficiency, traction, stability, and comfort. Accurate and reliable estimation of these parameters therefore enables reliable implementation of a large number of vehicle control functions.

To remedy this, systems, methods and other approaches are provided for determining the shape of at least part of a tyre. One or more wheel-mounted radar sensors are used to determine the positions of a plurality of radio-reflective objects associated with the tyre. For example, the radio-reflective objects may be embedded in the tread of the tyre. Based on the determined positions of the radio-reflective objects, the shape of the part of the tyre comprising the objects can be determined. Further parameters of the tyre, such as a contact patch area between the tyre and a ground surface supporting the tyre, a stiffness of the tyre, a pressure of the tyre, and a tyre force acting between the tyre and a ground surface, can be determined based on the determined shape.

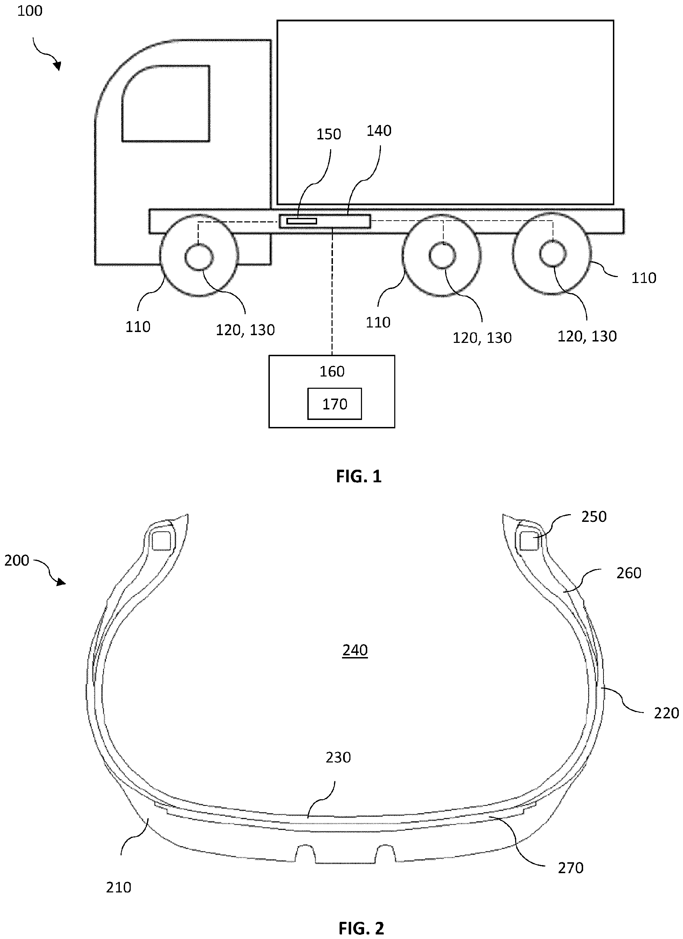

**FIG. 1** schematically shows a side view of an example vehicle **100** of the type considered in this disclosure. The vehicle **100** may be any suitable form of vehicle. For example, the disclosure can be applied in heavy-duty vehicles, such as trucks, buses, construction equipment, and multi-unit vehicle combinations, in personal vehicles such as cars, vans, or motorbikes, or in any other suitable form of vehicle. The vehicle **100** comprises a number of axles, each generally having two or more wheels **110.** Each wheel is provided with a tyre. Whilst three axles are shown, it will be appreciated that any suitable number of axles may be provided. It will also be appreciated that any number of the axles may be driven axles. The vehicle **100** normally comprises a steered axle, or more than one steered axle.

The vehicle **100** may comprise one or more sources of propulsion. For example, the vehicle **100** may comprise one or more electrical machines **120** such as electric motors and/or generators. The vehicle **100** may comprise one or more batteries (not shown) configured to provide power to the electrical machines **120.** In some examples, the vehicle **100** may also include another source of propulsion, for example an internal combustion engine (ICE). The vehicle **100** also comprises a drivetrain (not shown) to deliver mechanical power from the propulsion source (the electrical machines **120** or the ICE) to the wheels **110.** The vehicle **100** may be driven solely by ICE, solely by electric machines, or by a combination of electric and combustion engine based motors.

The electrical machines **120** are configured to drive, e.g. provide torque and/or steering to, one or more axles or individual wheels **110** of the vehicle **100.** The electrical machines **120** can supply either a positive (propulsion) or negative (braking) force. The use of electrical machines **120** to supply a negative force is known as regenerative braking, in which case the electrical machines **120** may be operated as generators, in order to recover energy during braking.

Furthermore, the vehicle **100** may comprise one or more sets of service brakes **130.** The service brakes **130** can supply a negative (braking) force. The service brakes **130** may be, for example, frictional brakes such as pneumatic brakes. Pneumatic brakes use a compressor to fill the brake with air, which may be powered by the batteries. In some examples, the brakes may be electro-mechanical brakes. The energy recovered from regenerative braking by the electrical machines **120** can be stored in the batteries, and so regenerative braking may generally be preferred over using service brakes. The electrical machines **120,** service brakes **130,** and ICE of a vehicle **100** may be referred to as actuators or motion support devices (MSDs) of the vehicle **100.**

In some examples, the vehicle **100** may be a vehicle combination comprising a number of units, including a tractor unit and at least one trailing unit. A tractor unit is generally the foremost unit in a vehicle combination, and may comprise the cabin for the driver, including steering controls, dashboard displays and the like. Generally, the tractor unit is used to provide propulsion power for the vehicle combination **100.** A trailing unit is generally used to store goods that are being transported by the vehicle combination **100.** A trailing unit may be a truck, trailer, dolly and the like. A trailing unit may also provide propulsion to the vehicle combination **100.** In such examples, each unit may comprise its own electrical machines **120,** batteries, service brakes **130,** and the like. In this way, all units may provide propulsion to the vehicle combination **100.**

The vehicle **100** may include a controller **140** comprising processing circuitry **150.** The controller **140** is configured to control components of the vehicle, for example the electrical machines **120.** **FIG. 1** shows a common controller **140** for all electrical machines **120** of the vehicle **100,** however it will be appreciated that each electrical machine **120** may have its own respective controller **140.** In many cases, the controller **140** may be implemented in the structure of the electrical machine **120** itself. The controller **140** may be a microcontroller. In examples where the vehicle **100** is a vehicle combination, the vehicle **100** may include a global controller and a plurality of unit controllers, for example a controller for each unit. Vehicle motion management may therefore be available on a unit level to receive requests from a manual or virtual driver to coordinate the propulsion, braking and steering.

The controller **140** may receive control signals from a computer system **160** comprising processing circuitry **170.** The computer system **160** may be a vehicle control unit configured to perform various vehicle (unit) control functions, such as vehicle motion management. The computer system **160** may be local to the vehicle **100,** or may be a remote system, implemented at a distance from the vehicle **100.** The computer system **160** may be communicatively coupled to the controller **140** in any suitable way, for example via a circuit or any other wired, wireless, or network connection known in the art. Furthermore, the communicative coupling may be implemented as a direct connection between the controller **140** and the computer system **160,** or may be implemented as a connection via one or more intermediate entities.

One function of the controller **140** and the computer system **160** is to provide control inputs for the vehicle **100,** for example torque, force, or slip requests. To enable these control inputs to be accurate, reliable, and achieve certain objectives, an accurate estimation of tyre parameters is required.

**FIG. 2** schematically shows a cross-section of an example tyre **200** of the type considered in this disclosure. Such a tyre may be implemented on one or more of the wheels **110** of the vehicle **100** discussed in relation to **FIG. 1****.** The tyre **200** is built up of several layers, including a tread layer **210** that makes contact with the ground, a sidewall **220,** and an inner liner **230** that bounds an interior space **240** of the tyre **200.** These components may be made of any suitable material, for example natural or synthetic rubber compounds, or a blend of the two, comprising suitable additives, as known in the art. The tyre **200** also comprises a bead **250** located at the inner edges of the tyre **200** to connect the tyre **200** to the wheel rim, and an apex **260,** which is a wedge-shaped rubber component that sits above the bead **250** to provide stability to the sidewall **220** and improve ride comfort. The tyre **200** also comprises a belt or belt reinforcement **270** configured to add structural strength to the tyre **200,** improving performance, durability, and safety. The belt **270** is traditionally made of steel, in some examples with additional reinforcement materials, such as Kevlar, nylon, or aramid. In some examples, alternative materials may be used, such as carbon fibre, glass fibre, and other polymer alternatives.

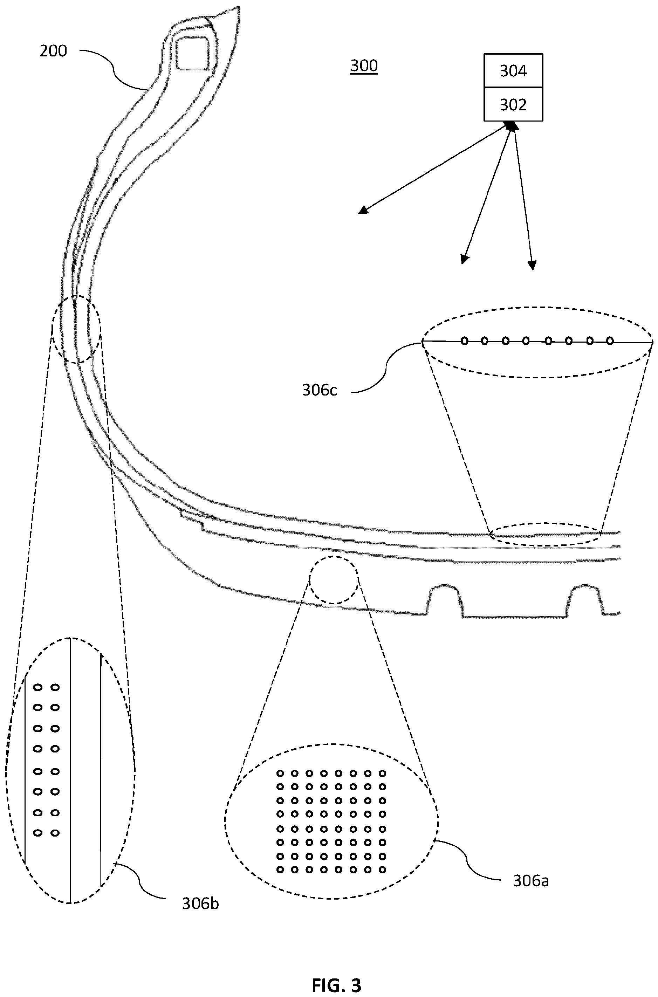

**FIG. 3** schematically shows a system **300** for determining the shape of at least part of a tyre **200.** Such a system may be implemented in a tyre implemented on one or more of the wheels **110** of the vehicle **100** discussed in relation to **FIG. 1****.** The system **300** comprises at least one wheel-mounted radar sensor **302** and associated processing circuitry **304.** The system **300** also comprises a plurality of radio-reflective objects **306** associated with the tyre **200.**

The radar sensor **302** comprises a radar antenna and/or transceiver configured to receive and/or transmit radio waves. In particular, the radar sensor **302** emits a radar beam outwards towards the radio-reflective objects **306** and receives radar backscatter in the form of reflected radio waves from each of the radio-reflective objects **306.** The radar sensor **302** may be configured to emit a radar beam in any suitable direction. By analysing the time taken for the radio waves to travel to each of the radio-reflective objects **306** and back, the distance between the radar sensor **302** and each of the radio-reflective objects **306** can be determined, as known in the art. Based on a known position of the radar sensor **302,** the positions of the radio-reflective objects **306** in the wheel frame of reference can be determined. This can be performed by processing circuitry **304** communicatively coupled to the radar sensor **302.**

The radio-reflective objects **306** may be formed in any suitable shape. For example, the radio-reflective objects **306** may be pellets, beads, studs, and the like. The radio-reflective objects **306** may be formed of any suitable radio-reflective material known in the art, such as steel, aluminium, and other metals, conductive polymers, certain dielectric materials, certain composite materials, or other materials with a suitable radio-reflective coating.

The radio-reflective objects **306** may be arranged at any suitable location in the tyre **200** that allows the shape of a corresponding part of the tyre **200** to be determined. For example, the radio-reflective objects **306** may be disposed (e.g. embedded) in the body of the tyre **200.** In some examples, radio-reflective objects **306** may be disposed in a radially outermost layer of the body of the tyre **200.** For example, radio-reflective objects **306a** may be disposed in the tread **210** of the tyre **200,** and/or radio-reflective objects **306b** may be disposed in the sidewall **220** of the tyre **200.** In these examples, the parts of the tyre **200** between the radar sensor **302** and the radio-reflective objects **306a, 306b,** e.g. the tread **210,** the sidewall **220,** the inner liner **230,** and the belt **270** are made of a radio-permeable material (i.e. such that radio waves from the radar sensor **302** can be transmitted to and reflected from the radio-reflective objects **306a, 306b).** For example, these components of the tyre **200** may comprise materials such as rubber, glass fibre, carbon fibre, suitable polymers, puncture repair gel, road noise absorbing foam, and the like that do not block radio waves from passing through them. In some examples, radio-reflective objects **306c** may be disposed on the inner liner **230** of the tyre **200.** In these examples, only the inner liner **230** need be radio-permeable. In some examples, radio-reflective objects **306c** may be disposed on the inner surface of the inner liner **230** of the tyre **200,** in which case there is no requirement for the tyre to have radio-permeable components.

The radio-reflective objects **306** may be arranged in any suitable configuration that allows the shape of a corresponding part of the tyre **200** to be determined. For example, the radio-reflective objects **306** may be arranged in a known or predetermined pattern from the perspective of the radar sensor **302** (i.e. into the plane of **FIG. 3****),** for example a line, grid, circle, and the like. A known configuration can be used as a reference to detect any change in position of the radio-reflective **306** objects over time. The radio-reflective objects **306** may be arranged in one or more radially distributed layers, as shown by the radio-reflective objects **306a, 306b, 306c in** **FIG. 3****.** In one example, the radio-reflective objects **306** may be arranged in a grid pattern and in a plurality of radially distributed layers, thereby forming a lattice structure. The radio-reflective objects **306** may be spaced sufficiently distant from each other such that their individual positions can be determined using the radar sensor **302.** Such a distance will be readily implementable by the skilled person, for example based on the properties of the signal from the radar sensor **302.**

As mentioned above, by analysing the time taken for the radio waves to travel to each of the radio-reflective objects **306** and back, the distance between the radar sensor **302** and each of the radio-reflective objects **306** can be determined, as known in the art. Based on a known position of the radar sensor **302** (for example, at the edge or rim of a hub of the wheel **110,** or elsewhere in the wheel **110,** such as in a hub cap or other part of the hub, or in part of the tyre **200** itself), the processing circuitry **304** can determine the positions of the radio-reflective objects **306** in the wheel frame of reference. In some examples, the radar sensor **302** may determine the azimuth angle, elevation angle, and slant range for each particular measurement, as known in the art. Based on this, a three-dimensional position of each of the radio-reflective objects **306** can be determined, for example in polar coordinates. In turn, a relative position between each of the radio-reflective objects **306** can also be determined. This may be achieved by matching the determined positions to a known pattern of the radio-reflective objects **306** such that the relative positions between the radio-reflective objects **306** can be determined. Additionally or alternatively, the positions of the radio-reflective objects **306** can be estimated periodically and/or continuously, and the latest measurement can compared to that at a previous timestep.

Once the position of each of the radio-reflective objects **306** is known, a corresponding shape of the part of the tyre **200** comprising the radio-reflective objects **306** can be determined. For example, by mapping the positions of the radio-reflective objects **306** the shape of the tyre **200** can be reconstructed. This can be achieved using any suitable method known to the skilled person. This can be used to determine important information about how the tyre **200** is behaving. For example, the shape of the tyre **200** at a vertically lower portion can be used to determine the contact patch area between the tyre **200** and a ground surface supporting the tyre **200.** This can in turn be used to determine tyre force acting between the tyre **200** and the ground surface. The shape of the tyre **200** can also be indicative of a tyre stiffness and/or a tyre pressure. Further detail on this can be found, for example, in *"*The Dynamic Response of Tyres to Brake Torque Variations and Road Unevennesses" by Peter Willem Anton Zegelaar, Delft University of Technology, March 1998, in particular Chapter 4, "The Rolling Tyre as a Geometric Filter over Short Wavelength Road Unevennesses" and section 4.2, "The flexible ring model*".*

This approach can also be used to determine deformation of the tyre **200** over time. For example, the system **300** can be used to determine a first position of each of the radio-reflective objects **306** at a first time, determine a second position of each of the radio-reflective objects **306** at a second time later than the first time, and determine deformation of the tyre **200** between the first time and the second time based on a difference between the first and second positions. By determining the positions of the radio-reflective objects **306** at two or more time instants, a change in the positions can be determined. This can be achieved based on changes in the absolute positions of the radio-reflective objects **306,** or changes in the relative positions between them. Relative positions are almost independent of the position of the the radar sensor **302.** As such, an advantage of using relative positions instead of absolute positions is that relative positioning is normally more robust, as the position of the the radar sensor **302** may change due to factors such as mechanical impact and the like. Deformation information can be used to understand tyre dynamics, i.e. how forces are generated with respect to time, which can also be used to analyse tyre stiffness and/or type (e.g. based on how quickly the tyre shape and/or forces change over time).

In some examples, the radar sensor **302** and processing circuitry **304** may be provided in a single, integrated unit. In these examples, the radar sensor **302** may be communicatively coupled to the processing circuitry **304** via any suitable circuit or wired network connection known in the art. In some examples, the radar sensor **302** and processing circuitry **304** may be provided in separate wheel-mounted units. In these examples, the radar sensor **302** may be communicatively coupled to the processing circuitry **304** via any suitable wireless or network connection known in the art. In some examples, the processing circuitry **304** may be implemented by the processing circuitry **150** of the controller **140,** or the processing circuitry **170** of the computer system **160** described in relation to **FIG. 1****.** The radar sensor **302** may be communicatively coupled to the controller **140,** or the computer system **160** in any suitable way, for example via a circuit or any other wired, wireless, or network connection known in the art. All communicative couplings may be implemented as a direct connection or via one or more intermediate entities.

In the example of **FIG. 3****,** the radar sensor **302** and processing circuitry **304** are mounted in the wheel **110,** for example at the edge or rim of a hub of the wheel **110.** It may be envisaged that the radar sensor **302** and processing circuitry **304** may be mounted elsewhere in the wheel **110,** for example in a hub cap or other part of the hub, or in part of the tyre **200** itself, as long as the radar sensor **302** is capable of receiving reflected radio waves from the radio-reflective objects **306.**

Whilst a single radar sensor **302** is shown in **FIG. 3****,** multiple wheel-mounted radar sensors **302** may be present in the system **300.** It is noted that a radar sensor **302** generally illuminates an area and not a localized small point, since the radar beam is normally not a true laser-like or pencil-shaped beam. Thus, even single-beam radar sensors simultaneously collect radar backscatter from different observation directions due to the spread of the main radar transmission lobe, i.e., due to the shape of the main lobe of the radar sensor antenna including effects of, e.g., the radar front end on the overall transmission pattern of the radar sensor **302.** The radar sensor **302** will therefore be capable of detecting a distance to a number of radio-reflective objects **306** simultaneously. It will be appreciated by the skilled person that more than one radar sensor **302** may be employed to cover a larger area of the tyre **200,** in the case that a single radar sensor **302** is not capable of detecting all radio-reflective objects **306** of the tyre **200.** In this case, each radar sensor **302** may comprise a radar antenna communicatively coupled to common processing circuitry **304.** In another example, each radar sensor **302** may have its own dedicated processing circuitry **304.** In some examples, a combination of common and dedicated processing circuitry **304** may be provided. This disclosure is not limited to any particular radar sensor architecture, nor any particular processing circuitry architecture.

The radar beam may also detect backscatter from outside the tyre **200,** for example to a ground surface supporting the tyre **200** (including penetrating slightly below the immediate surface of the ground).

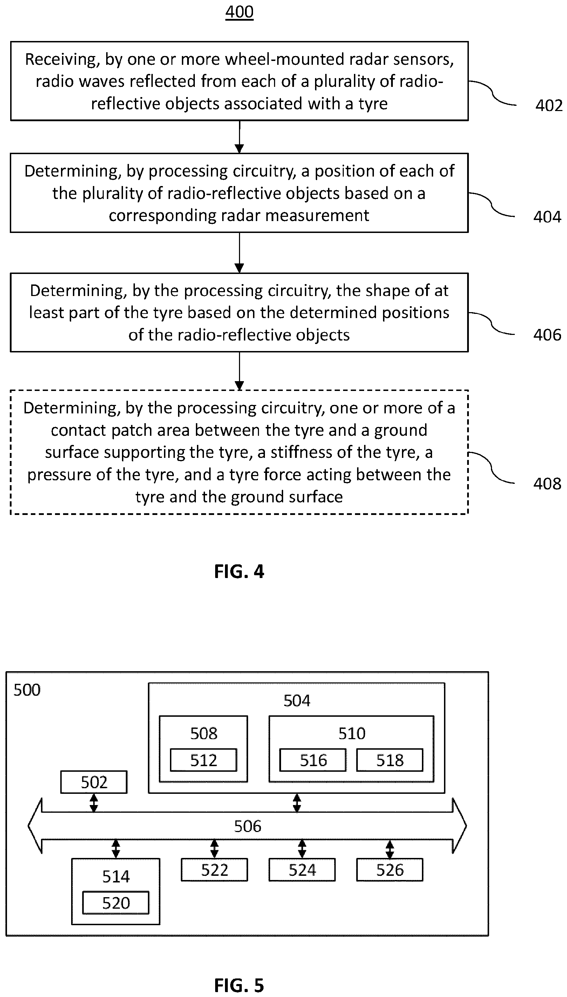

**FIG. 4** is a flow chart of a method **400** according to an example. The method **400** is for determining the shape of at least part of a tyre **200.** Such a method may be performed in relation to a tyre implemented on one or more of the wheels **110** of the vehicle **100** discussed in relation to **FIG. 1****.** The method **400** enables different tyre parameters to be determine and tyre behaviour to be analysed in a faster, more accurate, manner. The method may be performed by the system **300** discussed in relation to **FIG. 3****.**

At **402,** radio waves reflected from each of a plurality of radio-reflective objects **306** associated with the tyre **200** are received by one or more wheel-mounted radar sensors **302.** The radar sensor **302** emits a radar beam outwards towards the radio-reflective objects **306** and receives radar backscatter in the form of reflected radio waves from each of the radio-reflective objects **306.** The radio-reflective objects **306** may be arranged at any suitable location in the tyre **200** and in any suitable configuration that allows the shape of a corresponding part of the tyre **200** to be determined.

The measurements made by the radar sensor **302** are then transmitted to processing circuitry communicatively coupled to the radar sensor **302.** In particular, a radar measurement corresponding to each of the radio-reflective objects **306** is transmitted from the radar sensor **302** to the processing circuitry, for example the processing circuitry **304.**

At **404,** a position of each of the plurality of radio-reflective objects **306** is determined based on a corresponding radar measurement. As discussed above, by analysing the time taken for the radio waves to travel from the radar sensor **302** to each of the radio-reflective objects **306** and back, the distance between the radar sensor **302** and each of the radio-reflective objects **306** can be determined, as known in the art. Based on a known position of the radar sensor **302** and angle data in the measurement, the position of each of the radio-reflective objects **306** can be determined in the wheel frame of reference, for example in polar coordinates. In turn, a relative position between each of the radio-reflective objects **306** can also be determined. This can be performed by processing circuitry, such as the processing circuitry **304,** communicatively coupled to the radar sensor **302.**

At **406,** the shape of at least part of the tyre **200** is determined based on the determined positions of the radio-reflective objects **306.** For example, by mapping the positions of the radio-reflective objects **306** the shape of the tyre **200** can be reconstructed. This can be performed by processing circuitry, such as the processing circuitry **304,** communicatively coupled to the radar sensor **302.** This can be performed by processing circuitry, such as the processing circuitry **304,** communicatively coupled to the radar sensor **302.**

At **408,** one or more of a contact patch area between the tyre **200** and a ground surface supporting the tyre **200,** a stiffness of the tyre **200,** a pressure of the tyre **200,** and a tyre force acting between the tyre **200** and the ground surface may be determined based on the determined shape. Further detail on this can be found, for example, in *"*The Dynamic Response of Tyres to Brake Torque Variations and Road Unevennesses" by Peter Willem Anton Zegelaar, Delft University of Technology, March 1998, as discussed above. This can be performed by processing circuitry, such as the processing circuitry **304,** communicatively coupled to the radar sensor **302.**

In some examples, radar signal reflections from the interior of the tyre can be identified based on detection distance. For example, backscatter received from the inner liner **230** may indicate a different distance to that expected for the radio-reflective objects **306.** Such measurements can therefore be discounted from the determination of tyre shape or deformation.

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A system (300) for determining the shape of at least part of a tyre (200), the system (300) comprising: a plurality of radio-reflective objects (306) associated with the tyre (200); one or more wheel-mounted radar sensors (302) configured to receive radio waves reflected from each of the plurality of radio-reflective objects (306); and processing circuitry (150, 170, 304) configured to: determine a position of each of the plurality of radio-reflective objects (306) based on a corresponding radar measurement made by the one or more wheel-mounted radar sensors (302); and determine the shape of at least part of the tyre (200) based on the determined positions.
Example 2: The system (300) of example 1, wherein at least some of the plurality of radio-reflective objects (306) are disposed in the body of the tyre (200), wherein the body of the tyre comprises a radio-permeable material.
Example 3: The system (300) of example 2, wherein at least some of the plurality of radio-reflective objects (306) are disposed in a radially outermost layer (210, 220) of the body of the tyre (200).
Example 4: The system (300) of any preceding example, wherein at least some of the plurality of radio-reflective objects (306) are disposed on an inner liner (230) of the tyre (200).
Example 5: The system (300) of any preceding example, wherein at least some of the plurality of radio-reflective objects (306) are arranged in a predetermined pattern from the perspective of the one or more wheel-mounted radar sensors (302).
Example 6: The system (300) of any preceding example, wherein at least some of the plurality of radio-reflective objects (306) are arranged in one or more radially distributed layers.
Example 7: The system (300) of any preceding example, wherein the processing circuitry (150, 170, 304) is configured to: determine a respective distance between the one or more radar sensors (302) and each of the plurality of radio-reflective objects (306) based on the corresponding radar measurement; and determine the position of each of the plurality of radio-reflective objects (306) based on the respective determined distances.
Example 8: The system (300) of example 7, wherein the processing circuitry (150, 170, 304) is configured to determine the position of each of the plurality of radio-reflective objects (306) further based on angle data comprised in the corresponding radar measurement.
Example 9: The system (300) of any preceding example, wherein the processing circuitry (150, 170, 304) is further configured to determine one or more of a contact patch area between the tyre (200) and a ground surface supporting the tyre (200), a stiffness of the tyre (200), a pressure of the tyre (200), and a tyre force acting between the tyre (200) and a ground surface based on the determined shape.
Example 10: The system (300) of any preceding example, wherein the processing circuitry (150, 170, 304) is further configured to: determine a first position of each of the plurality of radio-reflective objects (306) based on a first corresponding radar measurement made at a first time by the one or more wheel-mounted radar sensors (302); determine a second position of each of the plurality of radio-reflective objects (306) based on a second corresponding radar measurement made at a second time by the one or more wheel-mounted radar sensors (302), wherein the second time is later than the first time; and determine deformation of the tyre (200) between the first time and the second time based on a difference between the first position and the second position.
Example 11: The system (300) of any preceding example, wherein the processing circuitry (150, 170, 304) is configured to determine deformation of the tyre (200) based on one or more of a difference between the absolute first position and the absolute second position of one or more of the plurality of radio-reflective objects (306) and a difference between relative positions of two or more of the plurality of radio-reflective objects (306).
Example 12: A tyre (200) comprising the system (300) of any preceding example.
Example 13: A vehicle (100) comprising the system (300) of any preceding example.
Example 14: A method (400) for determining the shape of at least part of a tyre (200), the method (400) comprising: receiving (402), by one or more wheel-mounted radar sensors (302), radio waves reflected from each of a plurality of radio-reflective objects (306) associated with the tyre (200); determining (404), by processing circuitry (150, 170, 304) of a computer system (140, 160), a position of each of the plurality of radio-reflective objects (306) based on a corresponding radar measurement by the one or more wheel-mounted radar sensors (302); and determining (406), by the processing circuitry (150, 170, 304), the shape of at least part of the tyre (200) based on the determined position.
Example 15: The method (400) of example 14, wherein at least some of the plurality of radio-reflective objects (306) are disposed in the body of the tyre (200), wherein the body of the tyre comprises a radio-permeable material.
Example 16: The method (400) of example 14 or 15, wherein at least some of the plurality of radio-reflective objects (306) are disposed in a radially outermost layer (210, 220) of the body of the tyre (200).
Example 17: The method (400) of any of examples 14 to 16, wherein at least some of the plurality of radio-reflective objects (306) are disposed on an inner liner (230) of the tyre (200).
Example 18: The method (400) of any of examples 14 to 17, wherein at least some of the plurality of radio-reflective objects (306) are arranged in a predetermined pattern from the perspective of the one or more wheel-mounted radar sensors (302).
Example 19: The method (400) of any of examples 14 to 18, wherein at least some of the plurality of radio-reflective objects (306) are arranged in one or more radially distributed layers.
Example 20: The method (400) of any of examples 14 to 19, further comprising determining, by the processing circuitry (150, 170, 304), a respective distance between the one or more radar sensors (302) and each of the plurality of radio-reflective objects (306) based on the corresponding radar measurement; and determining, by the processing circuitry (150, 170, 304), the position of each of the plurality of radio-reflective objects (306) based on the respective determined distances.
Example 21: The method (400) of example 20, further comprising determining, by the processing circuitry (150, 170, 304), the position of each of the plurality of radio-reflective objects (306) further based on angle data comprised in the corresponding radar measurement.
Example 22: The method (400) of any of examples 14 to 21, further comprising determining, by the processing circuitry (150, 170, 304), one or more of a contact patch area between the tyre (200) and a ground surface supporting the tyre (200), a stiffness of the tyre (200), a pressure of the tyre (200), and a tyre force acting between the tyre (200) and a ground surface based on the determined shape.
Example 23: The method (400) of any of examples 14 to 22, further comprising determining, by the processing circuitry (150, 170, 304), a first position of each of the plurality of radio-reflective objects (306) based on a first corresponding radar measurement made at a first time by the one or more wheel-mounted radar sensors (302); determining, by the processing circuitry (150, 170, 304), a second position of each of the plurality of radio-reflective objects (306) based on a second corresponding radar measurement made at a second time by the one or more wheel-mounted radar sensors (302), wherein the second time is later than the first time; and determining, by the processing circuitry (150, 170, 304), deformation of the tyre (200) between the first time and the second time based on a difference between the first position and the second position.
Example 24: The method (400) of any of examples 14 to 23, further comprising determining, by the processing circuitry (150, 170, 304), deformation of the tyre (200) based on one or more of a difference between the absolute first position and the absolute second position of one or more of the plurality of radio-reflective objects (306) and a difference between relative positions of two or more of the plurality of radio-reflective objects (306).
Example 25: A computer system (140, 160) for determining the shape of at least part of a tyre (200), the computer system (140, 160) comprising processing circuitry (150, 170, 304) configured to: receive a radar measurement corresponding to each of a plurality of radio-reflective objects (306) associated with the tyre (200) from one or more wheel-mounted radar sensors (302); determine a position of each of the plurality of radio-reflective objects (306) based on a corresponding radar measurement by the one or more wheel-mounted radar sensors (302); and determine the shape of at least part of the tyre (200) based on the determined position.
Example 26: A computer-implemented method for determining the shape of at least part of a tyre (200), the computer-implemented method comprising: receiving, by processing circuitry (150, 170, 304) of a computer system (140, 160), a radar measurement corresponding to each of a plurality of radio-reflective objects (306) associated with the tyre (200) from one or more wheel-mounted radar sensors (302); determining (404), by the processing circuitry (150, 170, 304), a position of each of the plurality of radio-reflective objects (306) based on a corresponding radar measurement by the one or more wheel-mounted radar sensors (302); and determining (406), by the processing circuitry (150, 170, 304), the shape of at least part of the tyre (200) based on the determined position.
Example 27: A computer program product comprising program code for performing, when executed by processing circuitry (150, 170, 304), the computer-implemented method of example 26.
Example 28: A non-transitory computer-readable storage medium comprising instructions, which when executed by processing circuitry (150, 170, 304), cause the processing circuitry to perform the computer-implemented method of example 26.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system (300) for determining the shape of at least part of a tyre (200), the system (300) comprising:
a plurality of radio-reflective objects (306) associated with the tyre (200);
one or more wheel-mounted radar sensors (302) configured to receive radio waves reflected from each of the plurality of radio-reflective objects (306); and
processing circuitry (150, 170, 304) configured to:
determine a position of each of the plurality of radio-reflective objects (306) based on a corresponding radar measurement made by the one or more wheel-mounted radar sensors (302); and
determine the shape of at least part of the tyre (200) based on the determined positions.

2. The system (300) of claim 1, wherein at least some of the plurality of radio-reflective objects (306) are disposed in the body of the tyre (200), wherein the body of the tyre comprises a radio-permeable material.

3. The system (300) of claim 2, wherein at least some of the plurality of radio-reflective objects (306) are disposed in a radially outermost layer (210, 220) of the body of the tyre (200).

4. The system (300) of any preceding claim, wherein at least some of the plurality of radio-reflective objects (306) are disposed on an inner liner (230) of the tyre (200).

5. The system (300) of any preceding claim, wherein at least some of the plurality of radio-reflective objects (306) are arranged in a predetermined pattern from the perspective of the one or more wheel-mounted radar sensors (302).

6. The system (300) of any preceding claim, wherein the processing circuitry (150, 170, 304) is configured to:
determine a respective distance between the one or more radar sensors (302) and each of the plurality of radio-reflective objects (306) based on the corresponding radar measurement; and
determine the position of each of the plurality of radio-reflective objects (306) based on the respective determined distances.

7. The system (300) of claim 6, wherein the processing circuitry (150, 170, 304) is configured to determine the position of each of the plurality of radio-reflective objects (306) further based on angle data comprised in the corresponding radar measurement.

8. The system (300) of any preceding claim, wherein the processing circuitry (150, 170, 304) is further configured to determine one or more of a contact patch area between the tyre (200) and a ground surface supporting the tyre (200), a stiffness of the tyre (200), a pressure of the tyre (200), and a tyre force acting between the tyre (200) and a ground surface based on the determined shape.

9. A tyre (200) comprising the system (300) of any preceding example.

10. A vehicle (100) comprising the system (300) of any preceding claim.

11. A method (400) for determining the shape of at least part of a tyre (200), the method (400) comprising:
receiving (402), by one or more wheel-mounted radar sensors (302), radio waves reflected from each of a plurality of radio-reflective objects (306) associated with the tyre (200);
determining (404), by processing circuitry (150, 170, 304) of a computer system (140, 160), a position of each of the plurality of radio-reflective objects (306) based on a corresponding radar measurement by the one or more wheel-mounted radar sensors (302); and
determining (406), by the processing circuitry (150, 170, 304), the shape of at least part of the tyre (200) based on the determined position.

12. A computer system (140, 160) for determining the shape of at least part of a tyre (200), the computer system (140, 160) comprising processing circuitry (150, 170, 304) configured to:
receive a radar measurement corresponding to each of a plurality of radio-reflective objects (306) associated with the tyre (200) from one or more wheel-mounted radar sensors (302);
determine a position of each of the plurality of radio-reflective objects (306) based on a corresponding radar measurement by the one or more wheel-mounted radar sensors (302); and
determine the shape of at least part of the tyre (200) based on the determined position.

13. A computer-implemented method for determining the shape of at least part of a tyre (200), the computer-implemented method comprising:
receiving, by processing circuitry (150, 170, 304) of a computer system (140, 160), a radar measurement corresponding to each of a plurality of radio-reflective objects (306) associated with the tyre (200) from one or more wheel-mounted radar sensors (302);
determining (404), by the processing circuitry (150, 170, 304), a position of each of the plurality of radio-reflective objects (306) based on a corresponding radar measurement by the one or more wheel-mounted radar sensors (302); and
determining (406), by the processing circuitry (150, 170, 304), the shape of at least part of the tyre (200) based on the determined position.

14. A computer program product comprising program code for performing, when executed by processing circuitry (150, 170, 304), the computer-implemented method of claim 13.

15. A non-transitory computer-readable storage medium comprising instructions, which when executed by processing circuitry (150, 170, 304), cause the processing circuitry to perform the computer-implemented method of claim 13.
